# EUROPEAN PATENT APPLICATION

(11) **EP 4 401 004 A1**
(43) Date of publication of application: **17.07.2024**
(21) Application number: 23732798.6
(22) Date of filing: 16.03.2023
(51) Int. Cl.: G06K 17/00

(54) **ELECTROLYTE INJECTION CONTROL METHOD, DEVICE, AND STORAGE MEDIUM**

(30) Priority: 31.10.2022 CN 202211344490
(71) Applicant: Contemporary Amperex Technology Co., Limited, Ningde, Fujian 352100 (CN)
(72) Inventor: LIU, Quan, Ningde, Fujian 352100 (CN); QUE, Haihui, Ningde, Fujian 352100 (CN); SHEN, Chunqin, Ningde, Fujian 352100 (CN); SONG, Lei, Ningde, Fujian 352100 (CN)
(74) Representative: Ziebig Hengelhaupt Intellectual Property Attorneys Patentanwaltskanzlei PartGmbB
(86) International application number: PCT/CN2023/081848
(87) International publication number: WO 2024/093088

(57) **Abstract**

The present application discloses an electrolyte injection control method, a device and a storage medium. The method includes: reading electrolyte information from a data chip on a current electrolyte container by a reading device provided on a liquid delivery pipeline; acquiring production line identification information corresponding to a current production line corresponding to the liquid delivery pipeline; and controlling electrolyte injection to take place in the case of determining that an electrolyte type corresponding to the electrolyte container is consistent with an electrolyte type for the current production line based on the electrolyte information and the production line identification information. The present application automatically reads the electrolyte information recorded in the data chip by the reading device and automatically judges whether the type of an electrolyte contained in the electrolyte container is consistent with the electrolyte type required for the current production line. Only when they are determined to be consistent, the electrolyte injection will take place, making the electrolyte injection process more intelligent, improving the efficiency and accuracy of judging the electrolyte type, and avoiding the problem of substandard batteries and wasted materials due to electrolyte injection in the case of inconsistent types.

## Description

### CROSS-REFERENCE TO RELATED APPLICATION

The present application claims priority to Chinese patent application 202211344490.8 entitled "ELECTROLYTE INJECTION CONTROL METHOD, DEVICE, AND STORAGE MEDIUM" filed on October 31, 2022, the entire contents of which are incorporated herein by reference.

### TECHNICAL FIELD

The present application relates to the field of battery technologies, and in particular to an electrolyte injection control method, a device, and a storage medium.

### BACKGROUND ART

In the process of battery production, electrolyte injection is an important process concerning battery performance. The container holding electrolyte is connected to the electrolyte injecting device through a pipeline, and the electrolyte in the container is injected into the battery package on the production line through the electrolyte injecting device. If the type of an electrolyte contained in the container does not match the electrolyte type required for the production of batteries in that production line, it may result in the production of substandard batteries, which may lead to waste of materials and even cause safety hazards.

### SUMMARY OF THE INVENTION

In view of the above problem, the present application provides an electrolyte injection control method, a device, and a storage medium that can solve the problem in the prior art that the type of the injected electrolyte does not match the electrolyte type required for batteries produced on the production line. In order to provide a basic understanding of some aspects of the disclosed embodiments, a brief summary is given below. This summary part is not a general commentary, nor is it intended to identify key/significant constituent elements or to depict the scope of protection of these embodiments. Its sole purpose is to present some concepts in a simple form as a preamble to the detailed description that follows.

A first aspect of embodiments of the present application provides an electrolyte injection control method, comprising:
reading electrolyte information from a data chip on a current electrolyte container by a reading device provided on a liquid delivery pipeline;
acquiring production line identification information corresponding to a current production line corresponding to the liquid delivery pipeline; and
controlling electrolyte injection to take place in the case of determining that an electrolyte type corresponding to the electrolyte container is consistent with an electrolyte type for the current production line based on the electrolyte information and the production line identification information.

The reading device is provided on the liquid delivery pipeline and the data chip is provided on the electrolyte container. The electrolyte information recorded in the data chip can be read automatically by the reading device in the process of the liquid delivery pipeline approaching an outlet port on the electrolyte container and connecting to the outlet port. The production line identification information for the current production line is also acquired, and based on the automatically acquired electrolyte information and production line identification information, it is automatically judged whether the type of the electrolyte contained in the current electrolyte container is consistent with the electrolyte type required for the current production line. Only when they are determined to be consistent, the electrolyte injection will be controlled to take place. This enables automatic judgment of whether the type of the electrolyte in the electrolyte container is consistent with the type required for the production line, making the electrolyte injection process more intelligent, improving the efficiency and accuracy of judging the electrolyte type, and avoiding the problem of substandard batteries and wasted materials due to electrolyte injection in the case of inconsistent types.

In some embodiments, said reading electrolyte information from a data chip on a current electrolyte container by a reading device provided on a liquid delivery pipeline comprises:
establishing a short distance communication connection with the data chip on the electrolyte container by the reading device on the liquid delivery pipeline in the case where the distance between the liquid delivery pipeline and the current electrolyte container is less than a preset distance; and
reading electrolyte information stored in the data chip by the reading device based on the short distance communication connection.

In the process of connecting the liquid delivery pipeline to the current electrolyte container, the liquid delivery pipeline continuously approaches the electrolyte container, and when the distance between the liquid delivery pipeline and the electrolyte container is within the distance range supported by the short distance communication technology employed, a short distance communication connection between the reading device and the data chip is established, and based on this communication connection, the automatic reading of the electrolyte information corresponding to the current electrolyte container is realized. The use of the short distance communication technology to acquire electrolyte information can ensure that the acquired electrolyte information is obtained during the process of connecting the liquid delivery pipeline to the current electrolyte container, which effectively avoids the interference of other electrolyte containers stored in the production environment with the electrolyte injection process of the current production line, thus improving the accuracy of the judgment of the electrolyte type.

In some embodiments, said establishing a short distance communication connection with the data chip on the electrolyte container by the reading device on the liquid delivery pipeline includes:
establishing a radio frequency communication connection with a radio frequency identification (RFID) tag on the electrolyte container by an RFID reader on the liquid delivery pipeline.

By means of the RFID technology, the automatic reading of the electrolyte information corresponding to the current electrolyte container is realized, leading to a high accuracy of the read data. Moreover, the RFID technology is a point-to-point short distance communication, which can ensure that what is acquired is the electrolyte information for the electrolyte container to which the liquid delivery pipeline is connected, thus improving the accuracy of the judgment of the electrolyte type.

In some embodiments, said establishing a short distance communication connection with the data chip on the electrolyte container by the reading device on the liquid delivery pipeline includes:
establishing a near field communication (NFC) connection with an NFC data chip on the electrolyte container by an NFC reading device on the liquid delivery pipeline.

By means of the NFC technology, the automatic reading of the electrolyte information corresponding to the current electrolyte container is realized, leading to a high accuracy of the read data. The NFC technology is a point-to-point short distance communication, which supports a shorter communication distance than that is supported by the RFID technology, and can better ensure that what is acquired is the electrolyte information for the electrolyte container to which the liquid delivery pipeline is connected, thus improving the accuracy of the judgment of the electrolyte type.

In some embodiments, said acquiring production line identification information corresponding to a current production line corresponding to the liquid delivery pipeline includes:
scanning a graphic code on the liquid delivery pipeline by a code scanning device, and parsing the graphic code scanned to obtain the production line identification information corresponding to the current production line.

This embodiment enables automatic acquisition of the production line identification information for the current production line for use in subsequent judgment of the electrolyte type based on such production line identification information.

In some embodiments, said controlling electrolyte injection to take place in the case of determining that an electrolyte type corresponding to the electrolyte container is consistent with an electrolyte type for the current production line based on the electrolyte information and the production line identification information includes:
parsing out the electrolyte type corresponding to the current electrolyte container from the electrolyte information;
acquiring a preset electrolyte type corresponding to the current production line according to the production line identification information; and
controlling, in the case where the electrolyte type parsed out is consistent with the preset electrolyte type, a valve on a connection pipeline between the electrolyte container and a electrolyte injecting device to open.

Based on the electrolyte information corresponding to the current electrolyte container and the production line identification information corresponding to the current production line, the electrolyte type corresponding to the current electrolyte container and the electrolyte type required for the current production line are automatically acquired, and the injection of the electrolyte in the current electrolyte container is controlled to take place if the two are determined to be consistent by comparison. If the two are determined to be not consistent by comparison, the injection of the electrolyte in the current electrolyte container is not performed. This enables automatic and accurate judgment of whether the electrolyte type for the current electrolyte container meets requirements of the current production line, and injecting is not performed in the case of inconsistency of the types, thus avoiding the production of batteries that are substandard due to incorrect electrolyte types as well as the waste of materials caused by incorrect electrolyte types.

In some embodiments, the method further includes:
controlling the electrolyte injection to stop in the case of detecting a disconnection of the short distance communication connection between the reading device and the data chip.

Since the reading device uses a short distance communication technology to read the electrolyte information in the data chip, the communication connection between the reading device and the data chip will be disconnected when the liquid delivery pipeline is moving away from the data chip and the distance between the two is greater than the upper distance limit supported by the short distance communication technology used. Based on whether the communication connection between the two is disconnected or not, it is possible to quickly and accurately detect that the liquid delivery pipeline is disconnected from the current electrolyte container, so that it is possible to more timely control the electrolyte injection to stop when the connection is disconnected.

In some embodiments, the method further includes:
caching the electrolyte information;
re-reading electrolyte information by the reading device at preset intervals; and
controlling the electrolyte injection to stop in the case where the re-read electrolyte information is different from the cached electrolyte information.

The electrolyte information corresponding to the current electrolyte container is cached, and the electrolyte information is periodically read by the reading device and compared with the cached electrolyte information. Periodical judgment of whether the liquid delivery pipeline is disconnected from the current electrolyte container is realized, and when a disconnection is determined, electrolyte injection is controlled to stop, which results in high accuracy of judgment and thus enables reduction of wasted resources due to mismatch of electrolyte types.

In some embodiments, the method further includes:
acquiring container identification information corresponding to the electrolyte container;
in the case of said determining that an electrolyte type corresponding to the electrolyte container is consistent with an electrolyte type for the current production line, further determining, based on the production line identification information and the container identification information, whether electrolyte in the electrolyte container meets a preset injecting condition; and
in the case where the electrolyte in the electrolyte container meets the preset injecting condition, performing the operation of controlling electrolyte injection to take place.

In the case of determining that the electrolyte type for the current electrolyte container is consistent with the electrolyte type corresponding to the current production line, it is further judged, based on the container identification information for the current electrolyte container and the production line identification information for the current production line, whether the electrolyte in the current electrolyte container meets the preset injecting condition, and only in the case of meeting, the electrolyte injection is controlled to take place. In this way, a double judgment is made as to whether the electrolyte meets the production line requirements before injecting, which ensures that the injected electrolyte meets the production line requirements, thereby minimizing the problem of errors in the electrolyte injected during the electrolyte injection process.

In some embodiments, said determining, based on the production line identification information and the container identification information, whether electrolyte in the electrolyte container meets a preset injecting condition includes:
acquiring electrolyte detail information corresponding to the current production line based on the production line identification information, the electrolyte detail information comprising at least one of an electrolyte type, a specification, and an expiration date;
acquiring electrolyte detail information corresponding to the electrolyte container based on the container identification information; and
determining, based on the electrolyte detail information for the current production line and the electrolyte detail information corresponding to the electrolyte container, whether the electrolyte in the electrolyte container meets the preset injecting condition.

In the case of determining that the electrolyte type for the current electrolyte container is consistent with the electrolyte type corresponding to the current production line, it is further judged whether at least one of the electrolyte type, specification, and expiration date of the current electrolyte container meets the requirements of the current production line for the electrolyte type, specification, or expiration date, and only in the case of determining that the requirements are met, the electrolyte injection is controlled to take place. In this way, it is ensured that the injected electrolyte meets the requirements of the production line, thus avoiding substandard batteries and wasted resources caused by the electrolyte not meeting the requirements of the production line.

In some embodiments, said determining, based on the production line identification information and the container identification information, whether electrolyte in the electrolyte container meets a preset injecting condition includes:
sending the production line identification information and the container identification information to a host computer; and
receiving a judgment result returned by the host computer, the judgment result being used to indicate whether the electrolyte in the electrolyte container meets the preset injecting condition.

It is judged by the host computer whether the current electrolyte container meets the preset injecting condition, which saves the computing resources of the industrial control computer, and only in the case of determining that the requirements are met, the electrolyte injection is controlled to take place. In this way, it is ensured that the injected electrolyte meets the requirements of the production line, thus avoiding substandard batteries and wasted resources caused by the electrolyte not meeting the requirements of the production line.

In some embodiments, said acquiring container identification information corresponding to the electrolyte container includes:
parsing out the container identification information corresponding to the electrolyte container from the electrolyte information read by the reading device; or
obtaining the container identification information corresponding to the electrolyte container by scanning a graphic code on the electrolyte container by the code scanning device.

By setting the container identification information corresponding to the electrolyte container in the data chip or in the form of a graphic code, the industrial control computer can easily obtain the container identification information, and then determine, based on the container identification information, whether the current electrolyte container meets the preset injecting condition, thus improving the accuracy of judgment.

In a second aspect of embodiments of the present application, an electrolyte injection control apparatus is provided, including:
an acquisition module for reading electrolyte information from a data chip on a current electrolyte container by a reading device provided on a liquid delivery pipeline; and acquiring production line identification information corresponding to a current production line corresponding to the liquid delivery pipeline; and
a injecting control module for controlling electrolyte injection to take place in the case of determining that an electrolyte type corresponding to the electrolyte container is consistent with an electrolyte type for the current production line based on the electrolyte information and the production line identification information.

A third aspect of embodiments of the present application provides an electronic device, including: a memory, a processor, and a computer program stored on the memory and runnable on the processor, the processor executing the program to implement the method as described in the first aspect above.

A fourth aspect of embodiments of the present application provides a computer-readable storage medium having a computer program stored thereon, wherein the program is executed by a processor to implement the method as described in the first aspect above.

A fifth aspect of embodiments of the present application provides a computer program product including a computer program, wherein the computer program is executed by a processor to implement the method as described in the first aspect above.

Other features and advantages of the present application will be set forth in the subsequent specification and will become apparent, in part, from the specification, or, in part, may be inferred from the specification or determined without doubt or learned by implementing embodiments of the present application.

### BRIEF DESCRIPTION OF DRAWINGS

In order to more clearly illustrate the technical solutions in the embodiments of the present application or in the prior art, a brief description of the accompanying drawings that need to be used in the description of the embodiments or prior art is given below. Obviously, the accompanying drawings in the following description are only some of the embodiments recorded in the present application. For those of ordinary skill in the art, other accompanying drawings can be obtained based on these accompanying drawings without any creative work.
FIG. 1 illustrates a schematic diagram of a system structure on which electrolyte injection is based in the related art.
FIG. 2 illustrates a flowchart of an electrolyte injection control method of some embodiments of the present application.
FIG. 3 illustrates a schematic diagram of a system structure on which electrolyte injection is based in some embodiments of the present application.
FIG. 4 illustrates a flowchart of an electrolyte injection control method of some other embodiments of the present application.
FIG. 5 illustrates a structural block diagram of an electrolyte injection control apparatus of some embodiments of the present application.
FIG. 6 illustrates a structural block diagram of an electronic device of some embodiments of the present application.
FIG. 7 illustrates a schematic diagram of a computer-readable storage medium of some embodiments of the present application.

The realization of the purpose, functional features and advantages of the present application will be further described in conjunction with the embodiments with reference to the accompanying drawings.

### DETAILED DESCRIPTION

Embodiments of the technical solutions of the present application will be described in detail below in conjunction with the drawings. The following embodiments are only used to more clearly illustrate the technical solution of the present application, and therefore are only used as examples and cannot be used to limit the scope of protection of the present application.

Unless otherwise defined, all technical and scientific terms used herein have the same meaning as commonly understood by those skilled in the art belonging to the technical field of the present application; the terms used herein are intended only for the purpose of describing specific embodiments and are not intended to limit the present application; the terms "including" and "having" and any variations thereof in the specification and the claims of the present application and in the description of drawings above are intended to cover non-exclusive inclusion.

In the description of the embodiments of the present application, the technical terms "first", "second", and the like are used only to distinguish between different objects, and are not to be understood as indicating or implying a relative importance or implicitly specifying the number, particular order, or primary and secondary relation of the technical features indicated. In the description of the embodiments of the present application, "multiple" means two or more, unless otherwise expressly and specifically limited.

Reference herein to "an embodiment" means that a particular feature, structure, or characteristic described in connection with the embodiment can be included in at least one embodiment of the present application. The appearance of this phrase in various places in the specification does not necessarily refer to the same embodiment, nor is it a separate or alternative embodiment that is mutually exclusive with other embodiments. It is explicitly and implicitly understood by those skilled in the art that the embodiments described herein may be combined with other embodiments.

In the description of the embodiments of the present application, the term "and/or" is simply a description of an association of associated objects, which indicates that there may exist three relationships, for example, A and/or B may mean: the presence of A, the presence of both A and B, and the presence of B. In addition, the character "/" herein generally means that the associated objects before and after it are in an "or" relationship.

In the description of the embodiments of the present application, the term "multiple" refers to two or more (including two), and similarly, "multiple groups" refers to two or more (including two) groups, and "multiple sheets" refers to two or more (including two) sheets.

In the description of the embodiments of the present application, the orientation or position relationship indicated by the technical terms "center", "longitudinal", "transverse", "length", "width", "thickness", "upper," "lower," "front," "back," "left," "right," "vertical," "horizontal," "top," "bottom," "inner," "outer," "clockwise," "counterclockwise," "axial", "radial", "circumferential", etc. are based on the orientation or position relationship shown in the drawings and are intended to facilitate the description of the embodiments of the present application and simplify the description only, rather than indicating or implying that the device or element referred to must have a particular orientation or be constructed and operated in a particular orientation, and therefore are not to be interpreted as limitations on the embodiments of the present application.

In the description of the embodiments of the present application, unless otherwise expressly specified and limited, the technical terms "mount," "join," "connect," "fix," etc. should be understood in a broad sense, such as, a fixed connection, a detachable connection, or an integral connection; a mechanical connection, or an electrical connection; a direct connection, an indirect connection through an intermediate medium, an internal connection of two elements, or interaction between two elements. For those of ordinary skill in the art, the specific meanings of the above terms in the embodiments of the present application can be understood according to specific situations.

At present, batteries are widely used in electric bicycles, electric motorcycles, electric cars and other electric vehicles, as well as military equipment and aerospace and many other fields. The demand for batteries is huge, and in the battery production process, injecting electrolyte into the battery package is an important process that concerns the battery performance. In this process, the electrolyte container is connected to the electrolyte injecting device through the liquid delivery pipeline, and the electrolyte from the electrolyte container is injected into the battery package on the production line by the electrolyte injecting device.

On the same production line, the batteries produced use the same type of electrolyte, and the type of electrolyte in the electrolyte container must be consistent with the electrolyte type required for the production line in order to produce batteries that meet the requirements. In the related art, before injecting the electrolyte, the production line staff verifies that the type of an electrolyte contained in the electrolyte container is consistent with the electrolyte type required for the production line. However, the manual verification is inefficient and prone to errors.

Based on this, the inventors of the present application conduct an in-depth study and designs an electrolyte injection control method, which includes: reading electrolyte information from a data chip on a current electrolyte container by a reading device provided on a liquid delivery pipeline; acquiring production line identification information corresponding to a current production line corresponding to the liquid delivery pipeline; and controlling electrolyte injection to take place in the case of determining that an electrolyte type corresponding to the electrolyte container is consistent with an electrolyte type for the current production line based on the electrolyte information and the production line identification information.

The reading device is provided on the liquid delivery pipeline and the data chip is provided on the electrolyte container. The electrolyte information recorded in the data chip can be read automatically by the reading device in the process of the liquid delivery pipeline approaching an outlet port on the electrolyte container and connecting to the outlet port. The production line identification information for the current production line is also acquired, and based on the automatically acquired electrolyte information and production line identification information, it is automatically judged whether the type of the electrolyte contained in the current electrolyte container is consistent with the electrolyte type required for the current production line. Only when they are determined to be consistent, the electrolyte injection will be controlled to take place. This enables automatic judgment of whether the type of electrolyte in the electrolyte container is consistent with the type required for the production line, improving the intelligence of the electrolyte injection process, improving the efficiency and accuracy of judging the electrolyte type, and avoiding the problem of substandard batteries and wasted materials due to electrolyte injection in the case of inconsistent types.

The battery in embodiments of the present application can be any battery that requires electrolyte injection during the production process, such as a lithium-ion battery, a lithium-metal battery, a lead-acid battery, a nickel-cadmium battery, a nickel-metal hydride battery, a lithium-sulfur battery or a sodium-ion battery, and the like, which is not limited herein.

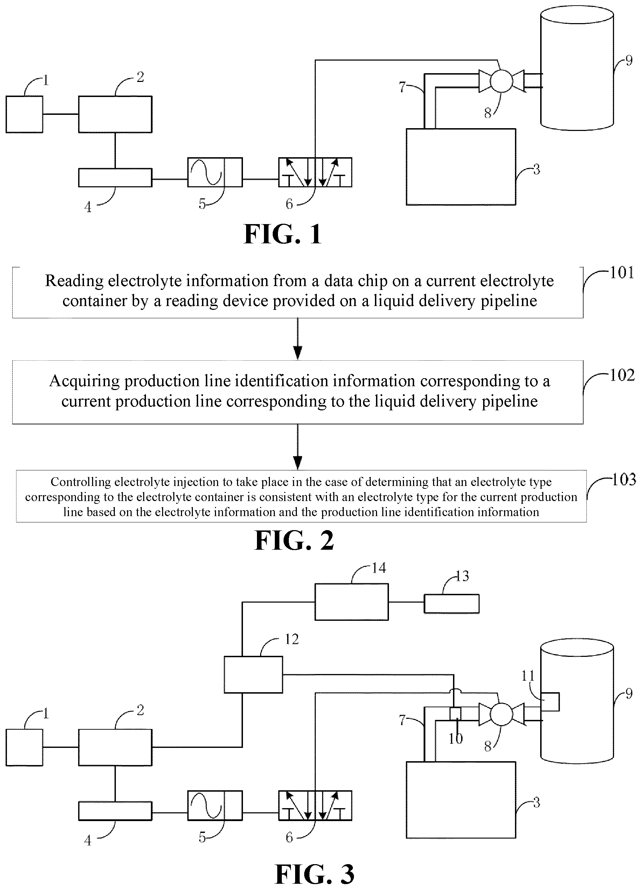

FIG. 1 illustrates the system architecture diagram of the electrolyte injection process in the related art. As shown in FIG. 1, the system includes a host computer 1, an industrial control computer 2, and a electrolyte injecting device 3. In the battery production process, one host computer 1 can be communicatively connected to multiple industrial control computers 2, and one industrial control computer 2 can control the battery production process on one or more production lines. The industrial control computer 2 is connected to a relay 5 and a solenoid valve 6 in sequence through a drive I/O card 4, and the solenoid valve 6 is connected to a valve 8 on a liquid delivery pipeline 7 of a certain production line, and the liquid delivery pipeline 7 is connected to the electrolyte injecting device 3 on the production line. By connecting the liquid delivery pipeline 7 to an outlet port of the electrolyte container 9 and controlling, through the industrial control computer 1, the valve 8 on the liquid delivery pipeline 7 to open, electrolyte in the electrolyte container 9 can be injected into the battery package on the production line through the electrolyte injecting device 3.

Based on the system architecture diagram shown in FIG. 1, an embodiment of the present application automatically determines whether the type of the electrolyte in the electrolyte container is consistent with the electrolyte type required for the production line. Referring to FIG. 2, an electrolyte injection control method provided by embodiments of the present application specifically includes the following steps:
Step 101: reading electrolyte information from a data chip on a current electrolyte container by a reading device provided on a liquid delivery pipeline.

The execution subject of embodiments of the present application can be an industrial control computer, or a control system including an industrial control computer and a host computer.

Embodiments of the present application changes the system architecture shown in FIG. 1, and the changed system architecture is shown in FIG. 3, where a reading device 10 is provided on the liquid delivery pipeline 7, and the reading device 10 may be provided at a position close to an inlet end of this liquid delivery pipeline 7. A data chip 11 is provided on the shell of the electrolyte container 9, and the data chip 11 can be provided at any position of the shell of the electrolyte container 9. As an example, the data chip 11 can be provided at a position on the shell of the electrolyte container 9 close to an outlet port of the container. The reading device 10 is connected to the industrial control computer 2 via a switch 12. As shown in FIG. 3, this system architecture further includes a code scanning device 13, and this code scanning device 13 is connected to the switch 12 through a router 14.

The above data chip is written with the electrolyte information corresponding to the electrolyte contained in the electrolyte container, wherein the electrolyte information includes at least the electrolyte type, and in addition to the electrolyte type, it may also include at least one of the production batch, expiration date, composition and other information about the electrolyte.

A communication connection can be established between the above-mentioned reading device on the liquid delivery pipeline and the data chip on the electrolyte container, and through the established communication connection, the reading device reads the electrolyte information stored in the data chip. The reading device sends the electrolyte information read to the switch, and the switch forwards the electrolyte information to the industrial control computer.

By arranging the reading device on the liquid delivery pipeline and the data chip on the electrolyte container, automatic acquisition of the electrolyte information corresponding to the electrolyte container is achieved, thus providing a data basis for automatically judging whether the type of the electrolyte in the electrolyte container is consistent with the electrolyte type required for the production line.

In embodiments of the present application, the communication between the reading device and the data chip can adopt a short distance communication technology, and the communication connection can be established only when the distance between the reading device and the data chip is short. Specifically, a short distance communication connection is established with the data chip on the electrolyte container by the reading device on the liquid delivery pipeline in the case where the distance between the liquid delivery pipeline and the current electrolyte container is less than a preset distance. Electrolyte information stored in the data chip is read by the reading device based on the short distance communication connection.

The above preset distance can be 3 meters, 1 meter, 50 centimeters or 10 centimeters, and so on. Embodiments of the present application impose no limitation on the specific value of this preset distance, which can be set as needed in practical application.

In the process of connecting the liquid delivery pipeline to the current electrolyte container, the liquid delivery pipeline continuously approaches the electrolyte container, and when the distance between the liquid delivery pipeline and the electrolyte container is within the distance range supported by the short distance communication technology employed, a short distance communication connection between the reading device and the data chip is established, and based on this communication connection, the automatic reading of the electrolyte information corresponding to the current electrolyte container is realized. The use of the short distance communication technology to acquire electrolyte information can ensure that the acquired electrolyte information is obtained during the process of connecting the liquid delivery pipeline to the current electrolyte container, which effectively avoids the interference of other electrolyte containers stored in the production environment with the electrolyte injection process of the current production line, thus improving the accuracy of the judgment of the electrolyte type.

In one implementation, the above-mentioned short distance wireless communication technology can adopt a radio frequency identification (RFID) technology. Specifically, an RFID reader is provided on the liquid delivery pipeline and an RFID tag is provided on the current electrolyte container. When the liquid delivery pipeline is approaching the current electrolyte container and the distance between the two comes within the radio frequency coverage supported by the adopted RFID technology, the RFID reader on the liquid delivery pipeline establishes a radio frequency communication connection with the RFID tag on the electrolyte container, and reads electrolyte information stored in the RFID tag based on this communication connection. In this implementation, the RFID reader is connected to the switch through an RFID controller, and the read electrolyte information is transmitted to the industrial control computer through the RFID controller and the switch in sequence. Labview software can be installed in the industrial control computer to read through this software the electrolyte information obtained by the RFID reader.

By means of the RFID technology, the automatic reading of the electrolyte information corresponding to the current electrolyte container is realized, leading to a high accuracy of the read data. Moreover, the RFID technology is a point-to-point short distance communication, which can ensure that what is acquired is the electrolyte information for the electrolyte container to which the liquid delivery pipeline is connected, thus improving the accuracy of the judgment of the electrolyte type.

In another implementation, the above-mentioned short distance wireless communication technology can adopt a near field communication (NFC) technology. Specifically, an NFC reading device is provided on the liquid delivery pipeline and an NFC data chip is provided on the current electrolyte container. When the liquid delivery pipeline is approaching the current electrolyte container and the distance between the two comes within the distance range supported by the adopted NFC technology, the NFC reading device on the liquid delivery pipeline establishes a near field communication connection with the NFC data chip on the electrolyte container, and reads electrolyte information stored in the NFC data chip based on this communication connection.

By means of the NFC technology, the automatic reading of the electrolyte information corresponding to the current electrolyte container is realized, leading to a high accuracy of the read data. The NFC technology is a point-to-point short distance communication, which supports a shorter communication distance than that is supported by the RFID technology, and can better ensure that what is acquired is the electrolyte information for the electrolyte container to which the liquid delivery pipeline is connected, thus improving the accuracy of the judgment of the electrolyte type.

Step 102: acquiring production line identification information corresponding to a current production line corresponding to the liquid delivery pipeline.

The above production line identification information is used to uniquely identify the current production line, and embodiments of the present application can hang a tag on the liquid delivery pipeline of the current production line with a graphic code containing the production line identification information printed on the tag. Alternatively, the graphic code can be printed directly on the outer surface of the liquid delivery pipeline. The graphic code can be a bar code or a QR code, and so on. Since the liquid delivery pipeline and the production line are in one-to-one correspondence, the above production line identification information can also be a pipeline code that uniquely identifies the liquid delivery pipeline.

The graphic code on the liquid delivery pipeline is scanned by the code scanning device in FIG. 3, and the scanned graphic code is parsed to obtain the production line identification information corresponding to the current production line. Automatic acquisition of the production line identification information for the current production line is realized for use in subsequent judgment of the electrolyte type based on such production line identification information.

Step 103: controlling electrolyte injection to take place in the case of determining that an electrolyte type corresponding to the electrolyte container is consistent with an electrolyte type for the current production line based on the electrolyte information and the production line identification information.

After obtaining the electrolyte information for the current electrolyte container and the production line identification information for the current production line through the above steps 101 and 102, respectively, based on the electrolyte information and the production line identification information, it is judged whether the type of the electrolyte contained in the current electrolyte container is consistent with the electrolyte type required for the current production line.

In embodiments of the present application, the mapping relationship between production line identification information for each production line and electrolyte types required for production lines has been pre-configured in the industrial control computer. After the production line identification information for the current production line is acquired, the preset electrolyte type corresponding to the current production line is acquired from the above pre-configured mapping relationship based on the production line identification information. In addition, the electrolyte type corresponding to the current electrolyte container is parsed out from the electrolyte information corresponding to the current electrolyte container. It is determined whether the preset electrolyte signal is consistent with the electrolyte type corresponding to the current electrolyte container through comparison. If they are consistent, a valve on a connection pipeline between the electrolyte container and the electrolyte injecting device is controlled to open so that the electrolyte in the current electrolyte container can be injected into the battery package on the current production line by the electrolyte injecting device. If it is determined that the preset electrolyte signal is not consistent with the electrolyte type corresponding to the current electrolyte container through comparison, the valve on the connection pipeline between the electrolyte container and the electrolyte injecting device is controlled to remain in a closed state.

Based on the electrolyte information corresponding to the current electrolyte container and the production line identification information corresponding to the current production line, the electrolyte type corresponding to the current electrolyte container and the electrolyte type required for the current production line are automatically acquired, and the injection of the electrolyte in the current electrolyte container is controlled to take place if the two are determined to be consistent by comparison. If the two are determined to be not consistent by comparison, the injection of the electrolyte in the current electrolyte container is not performed. This enables automatic and accurate judgment of whether the electrolyte type for the current electrolyte container meets requirements of the current production line, and injecting is not performed in the case of inconsistency of the types, thus avoiding the production of batteries that are substandard due to incorrect electrolyte types as well as the waste of materials caused by incorrect electrolyte types.

In the actual scenario of the electrolyte injection process, it may happen that the liquid delivery pipeline is artificially unplugged from the current electrolyte container and inserted into other electrolyte containers. In this case, the electrolyte type corresponding to the electrolyte container newly connected to the liquid delivery pipeline may not be consistent with the electrolyte type required for the current production line, so the electrolyte in this new electrolyte container cannot be injected immediately, and it is necessary to first judge whether the electrolyte type corresponding to this electrolyte container is consistent with the electrolyte signal required for the current production line.

In order to avoid directly injecting the electrolyte in the new electrolyte container in the above case, embodiments of the present application provide multiple implementations to detect whether the liquid delivery pipeline is disconnected from the current electrolyte container. In one implementation, during the process of determining the electrolyte type for the current electrolyte container and the electrolyte type for the current production line in the above-mentioned way and controlling the electrolyte injection to take place, it is detected in real time whether the short distance communication connection between the reading device on the liquid delivery pipeline and the data chip on the current electrolyte container is disconnected, and if the short distance communication connection between the reading device and the data chip is detected to be disconnected, electrolyte injection will be controlled to stop.

Since the reading device uses a short distance communication technology to read the electrolyte information in the data chip, the communication connection between the reading device and the data chip will be disconnected when the liquid delivery pipeline is moving away from the data chip and the distance between the two is greater than the upper distance limit supported by the short distance communication technology used. Based on whether the communication connection between the two is disconnected or not, it is possible to quickly and accurately detect that the liquid delivery pipeline is disconnected from the current electrolyte container, so that it is possible to more timely control the electrolyte injection to stop when the connection is disconnected.

In another implementation, after the electrolyte information corresponding to the current electrolyte container is obtained through step 101, it is cached. In the process of determining the electrolyte type for the current electrolyte container and the electrolyte type for the current production line in the above manner and controlling electrolyte injection to take place, the electrolyte information is re-read by the reading device at preset intervals, and the electrolyte information re-read each time is compared with the cached electrolyte information. If the re-read electrolyte information is the same as the cached electrolyte information, it indicates that the liquid delivery pipeline is still connected to the current electrolyte container, so the electrolyte injection is continued. If the re-read electrolyte information is not consistent with the cached electrolyte information, it indicates that the liquid delivery pipeline has been disconnected from the current electrolyte container and connected to another electrolyte container. So, in the case where the re-read electrolyte information is different from the cached electrolyte information, the electrolyte injection is controlled to stop.

The above preset interval can be 30s, Imin, 3min, etc. Embodiments of the present application do not limit the specific value of the above preset interval, which can be set as needed in practical application.

The electrolyte information corresponding to the current electrolyte container is cached, and the electrolyte information is periodically read by the reading device and compared with the cached electrolyte information. Periodical judgment of whether the liquid delivery pipeline is disconnected from the current electrolyte container is realized, and when a disconnection is determined, electrolyte injection is controlled to stop, which results in high accuracy of judgment and thus enables reduction of wasted resources due to mismatch of electrolyte types.

The specifications of different electrolyte containers may be different, and the expiration date of the electrolyte contained in them may also be different. Moreover, the amount of electrolyte required for the production of batteries in different production lines and the required expiration date of electrolyte may also be different. In some embodiments of the present application, the electrolyte detail information corresponding to the production line can be pre-configured in the industrial control computer, and the mapping relationship between the production line identification information and the corresponding electrolyte detail information can be configured. Also, the electrolyte detail information corresponding to each electrolyte container can be pre-configured and the mapping relationship between the container identification information and the corresponding electrolyte detail information can be configured. Here, the electrolyte detail information includes at least one of the electrolyte type, specification, expiration date, and other information.

After it is determined through the operations of steps 101-103 that the electrolyte type corresponding to the current electrolyte container is consistent with the electrolyte type required for the current production line, the container identification information corresponding to the current electrolyte container is acquired, the container identification information being used to uniquely identify the current electrolyte container. Based on the production line identification information for the current production line and the container identification information for the current electrolyte container, it is determined whether the electrolyte in the electrolyte container meets the preset injecting condition. If the electrolyte in the electrolyte container meets the preset injecting condition, the electrolyte injection is then controlled to take place.

The above preset injecting condition may include at least one of the following conditions: the specification of the current electrolyte container conforms to the specification corresponding to the current production line, the expiration date corresponding to the current electrolyte container is within the expiration date required for the current production line, and the electrolyte type corresponding to the current electrolyte container is consistent with the type required for the current production line.

At step 103, in the case of determining that the electrolyte type for the current electrolyte container is consistent with the electrolyte type corresponding to the current production line, it is further judged, based on the container identification information for the current electrolyte container and the production line identification information for the current production line, whether the electrolyte in the current electrolyte container meets the preset injecting condition, and only in the case of meeting, the electrolyte injection is controlled to take place. In this way, a double judgment is made as to whether the electrolyte meets the production line requirements before injecting, thus ensuring that the injected electrolyte meets the production line requirements and minimizing the problem of errors in the electrolyte injected during the electrolyte injection process.

In one implementation, the industrial control computer acquires, based on the production line identification information, the electrolyte detail information corresponding to the current production line from the mapping relationship between the pre-configured production line identification information and the electrolyte detail information; acquires, based on the container identification information, the electrolyte detail information corresponding to the current electrolyte container from the mapping relationship between the pre-configured container identification information and the electrolyte detail information; and determines, based on the electrolyte detail information for the current production line and the electrolyte detail information corresponding to the electrolyte container, whether the electrolyte in the electrolyte container meets the preset injecting condition.

Specifically, it can be judged whether the electrolyte type in the electrolyte detail information corresponding to the current electrolyte container is consistent with the electrolyte type in the electrolyte detail information for the current production line, and/or, judged whether the specifications of the container in the electrolyte detail information corresponding to the current electrolyte container are included in the specifications specified in the electrolyte detail information for the current production line, and/or, judged whether the expiration date in the electrolyte detail information corresponding to the current electrolyte container is within the expiration date specified in the electrolyte detail information for the current production line.

If it is judged that at least one of the type, specification, and expiration date meets the requirements of the current production line, it is determined that the electrolyte container meets the preset injecting condition.

At step 103, in the case of determining that the electrolyte type for the current electrolyte container is consistent with the electrolyte type corresponding to the current production line, it is further judged whether at least one of the electrolyte type, specification, and expiration date of the current electrolyte container meets the requirements of the current production line for the electrolyte type, specification, or expiration date, and only in the case of determining that the requirements are met, the electrolyte injection is controlled to take place. In this way, it is ensured that the injected electrolyte meets the requirements of the production line, thus avoiding substandard batteries and wasted resources caused by the electrolyte not meeting the requirements of the production line.

In some other embodiments of the present application, it is also possible to pre-configure the mapping relationship between the production line identification information and the electrolyte detail information and the mapping relationship between the container identification information and the electrolyte detail information after the host computer. After the industrial control computer determines that the electrolyte type corresponding to the current electrolyte container is consistent with the electrolyte type corresponding to the current production line and obtains the container identification information corresponding to the current electrolyte container, it can also send this container identification information as well as the production line identification information for the current production line to the host computer. Based on the container identification information and the production line identification information, the host computer further determines whether the electrolyte in the current electrolyte container meets the preset injecting condition and sends the judgment result to the industrial control computer. The industrial control computer receives the judgment result from the host computer. If the judgment result indicates that the electrolyte in the current electrolyte container meets the preset injecting condition, electrolyte injection is controlled to take place, otherwise electrolyte injection will not take place.

It is judged by the host computer whether the current electrolyte container meets the preset injecting condition, which saves the computing resources of the industrial control computer, and only in the case of determining that the requirements are met, the electrolyte injection is controlled to take place. In this way, it is ensured that the injected electrolyte meets the requirements of the production line, thus avoiding substandard batteries and wasted resources caused by the electrolyte not meeting the requirements of the production line.

In some embodiments of the present application, the above container identification information can be part of the electrolyte information corresponding to the current electrolyte container, which is pre-stored in the data chip of the current electrolyte container. After the reading device on the liquid delivery pipeline reads the electrolyte information from the data chip, the industrial control computer parses out the container identification information from the electrolyte information.

In some other embodiments, a graphic code, such as a bar code or a QR code, containing the container identification information can also be provided on the current electrolyte container. The graphic code is scanned by a code scanning device to obtain the container identification information corresponding to the current electrolyte container.

By setting the container identification information corresponding to the electrolyte container in the data chip or in the form of a graphic code, the industrial control computer can easily obtain the container identification information, and then determine, based on the container identification information, whether the current electrolyte container meets the preset injecting condition, thus improving the accuracy of judgment.

In embodiments of the present application, the reading device is provided on the liquid delivery pipeline and the data chip is provided on the electrolyte container. During the connection between the liquid delivery pipeline and the electrolyte container, the electrolyte information recorded in the data chip is automatically read by the reading device. Based on the automatically acquired electrolyte information, it is automatically judged whether the type of the electrolyte contained in the current electrolyte container is consistent with the electrolyte type required for the current production line. Only when they are determined to be consistent, the electrolyte injection will be controlled to take place, making the electrolyte injection process more intelligent, improving the efficiency and accuracy of judging the electrolyte type, and avoiding the problem of substandard batteries and wasted materials due to electrolyte injection in the case of inconsistent types.

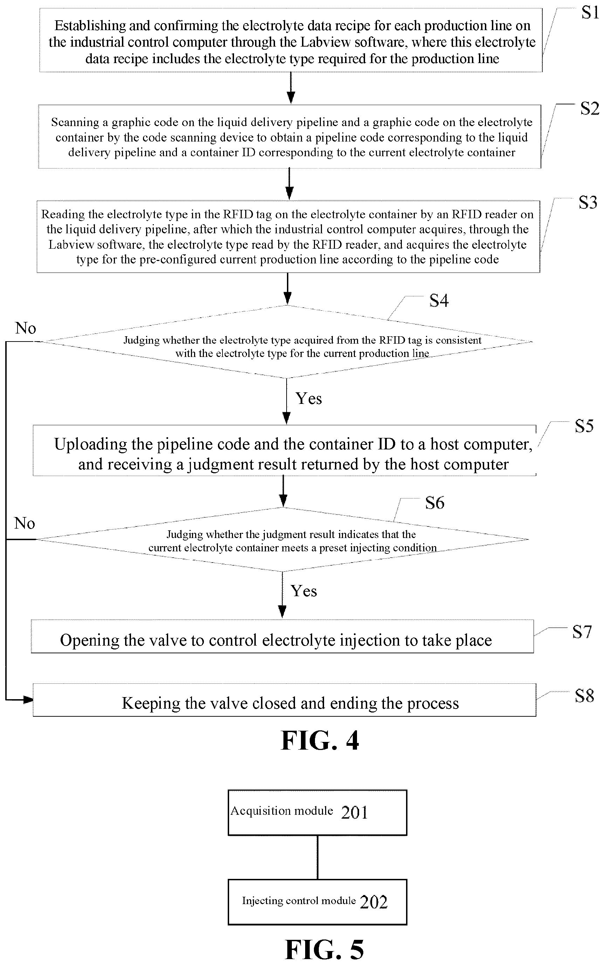

The following is a specific example to illustrate the control process of electrolyte injection, where this control process is based on the system shown in FIG. 3, and FIG. 4 illustrates the schematic flowchart of the control process. In this example, Labview software is installed in the industrial control computer, an RFID reader is provided on the liquid delivery pipeline, and an RDIF tag is provided the electrolyte container. The specific control process is as follows, S 1: establishing and confirming the electrolyte data recipe for each production line on the industrial control computer through the Labview software, where this electrolyte data recipe includes the electrolyte type required for the production line; S2: scanning a graphic code on the liquid delivery pipeline and a graphic code on the electrolyte container by the code scanning device to obtain a pipeline code corresponding to the liquid delivery pipeline and a container ID corresponding to the current electrolyte container; S3: reading the electrolyte type in the RFID tag on the electrolyte container by an RFID reader on the liquid delivery pipeline, after which the industrial control computer acquires, through the Labview software, the electrolyte type read by the RFID reader, and acquires the electrolyte type for the pre-configured current production line according to the pipeline code; S4: judging whether the electrolyte type acquired from the RFID tag is consistent with the electrolyte type for the current production line, and if yes, executing step S5, otherwise, executing step S8; S5: uploading the pipeline code and the container ID to a host computer, and receiving a judgment result returned by the host computer; S6: judging whether the judgment result indicates that the current electrolyte container meets a preset injecting condition, and if yes, executing step S7, and if not, executing step S8; S7: opening the valve to control electrolyte injection to take place; and S8: keeping the valve closed and ending the process.

With the RFID technology, the electrolyte type corresponding to the electrolyte container is automatically acquired, and if it is determined to be consistent with the preset electrolyte type for the current production line through comparison, the pipeline code of the current production line and the container ID of the current electrolyte container are sent to the host computer for further confirmation, and electrolyte injection is started only when it is confirmed that the current electrolyte container meets the injecting condition, otherwise injecting is not carried out, which ensures that the injected electrolyte meets the requirements of the production line, making the electrolyte injection process more intelligent, improving the efficiency and accuracy of judging the electrolyte type, and avoiding the problem of substandard batteries and wasted materials due to electrolyte injection in the case of inconsistent types.

As shown in FIG. 5, another embodiment of the present application provides an electrolyte injection control apparatus for performing the electrolyte injection method provided in any of the above embodiments, the apparatus including:
an acquisition module 201 for reading electrolyte information from a data chip on a current electrolyte container by a reading device provided on a liquid delivery pipeline; and acquiring production line identification information corresponding to a current production line corresponding to the liquid delivery pipeline; and
a injecting control module 202 for controlling electrolyte injection to take place in the case of determining that an electrolyte type corresponding to the electrolyte container is consistent with an electrolyte type for the current production line based on the electrolyte information and the production line identification information.

The acquisition module 201 is used for establishing a short distance communication connection with the data chip on the electrolyte container by the reading device on the liquid delivery pipeline in the case where the distance between the liquid delivery pipeline and the current electrolyte container is less than a preset distance; and reading electrolyte information stored in the data chip by the reading device based on the short distance communication connection.

The acquisition module 201 is used for establishing a radio frequency communication connection with a radio frequency identification (RFID) tag on the electrolyte container by an RFID reader on the liquid delivery pipeline.

The acquisition module 201 is used for establishing a near field communication (NFC) connection with an NFC data chip on the electrolyte container by an NFC reading device on the liquid delivery pipeline.

The acquisition module 201 is used for scanning a graphic code on the liquid delivery pipeline by a code scanning device, and parsing the graphic code scanned to obtain the production line identification information corresponding to the current production line.

The injecting control module 202 is used for parsing out the electrolyte type corresponding to the current electrolyte container from the electrolyte information; acquiring a preset electrolyte type corresponding to the current production line according to the production line identification information; and controlling, in the case where the electrolyte type parsed out is consistent with the preset electrolyte type, a valve on a connection pipeline between the electrolyte container and a electrolyte injecting device to open.

The injecting control module 202 is further used for controlling the electrolyte injection to stop in the case where the acquiring module 201 detects a disconnection of the short distance communication connection between the reading device and the data chip.

The acquisition module 201 is further used for caching the electrolyte information; and re-reading electrolyte information by the reading device at preset intervals; and the injecting control module 202 is further used for controlling the electrolyte injection to stop in the case where the re-read electrolyte information is different from the cached electrolyte information.

The injecting control module 202 is further used for acquiring container identification information corresponding to the electrolyte container; in the case of said determining that an electrolyte type corresponding to the electrolyte container is consistent with an electrolyte type for the current production line, further determining, based on the production line identification information and the container identification information, whether electrolyte in the electrolyte container meets a preset injecting condition; and in the case where the electrolyte in the electrolyte container meets the preset injecting condition, performing the operation of controlling electrolyte injection to take place.

The injecting control module 202 is further used for acquiring electrolyte detail information corresponding to the current production line based on the production line identification information, the electrolyte detail information comprising at least one of an electrolyte type, a specification, and an expiration date; acquiring electrolyte detail information corresponding to the electrolyte container based on the container identification information; and determining, based on the electrolyte detail information for the current production line and the electrolyte detail information corresponding to the electrolyte container, whether the electrolyte in the electrolyte container meets the preset injecting condition.

The injecting control module 202 is further used for sending the production line identification information and the container identification information to a host computer; and receiving a judgment result returned by the host computer, the judgment result being used to indicate whether the electrolyte in the electrolyte container meets the preset injecting condition.

The acquisition module 201 is further used for parsing out the container identification information corresponding to the electrolyte container from the electrolyte information read by the reading device; or obtaining the container identification information corresponding to the electrolyte container by scanning a graphic code on the electrolyte container by the code scanning device.

The electrolyte injection control apparatus provided in embodiments of the present application is motivated by the same inventive concept as the electrolyte injection control method provided in embodiments of the present application, and has the same beneficial effect as the method it employs, runs or implements.

Another embodiment of the present application provides an electronic device, which may be an industrial control computer, a host computer, and other devices used to perform production control on a battery production line. The electronic device includes a memory, a processor, and a computer program stored on the memory and runnable on the processor, the processor executing the program to implement the electrolyte injection control method of any of the above embodiments.

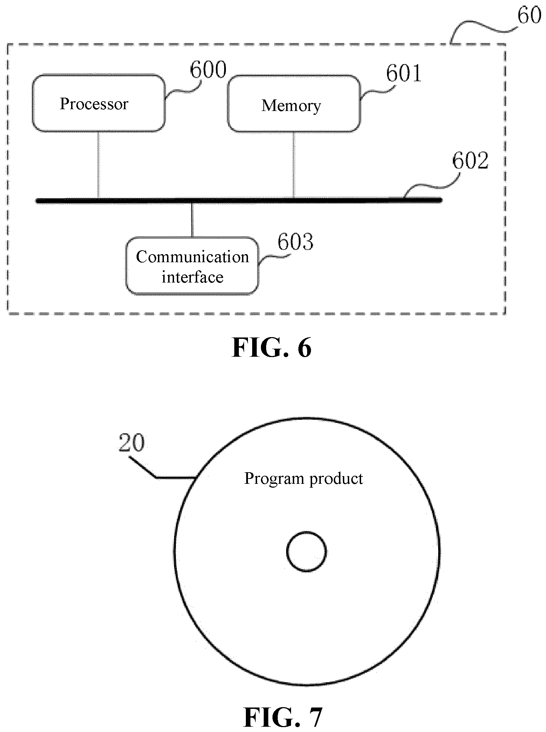

As shown in FIG. 6, an electronic device 60 may include: a processor 600, a memory 601, a bus 602, and a communication interface 603, wherein the processor 600, the communication interface 603, and the memory 601 are connected via the bus 602; and the memory 601 stores a computer program that is runnable on the processor 600, and the processor 600, when running the computer program, executes the method provided in any of the preceding embodiments of the present application.

Among them, the memory 601 may include a high-speed random access memory (RAM), and may also include a non-volatile memory, such as at least one disk memory. The communication connection between this system network element and at least one other network element is implemented through at least one communication interface 603 (which may be wired or wireless), which may use the Internet, a wide area network, a local network, a metropolitan area network, and the like.

The bus 602 may be an ISA bus, a PCI bus, or an EISA bus, and so on. Buses may be classified as address buses, data buses, control buses, and so on. Among them, the memory 601 is used to store a program, and the processor 600 executes the program after receiving an execution instruction, and the method disclosed in any of the foregoing embodiments of the present application may be applied in the processor 600, or implemented by the processor 600.

The processor 600 may be an integrated circuit chip with processing capabilities for signals. During implementation, the steps of the method described above may be accomplished by integrated logic circuitry in hardware in processor 600 or by instructions in the form of software. The processor 600 described above may be a general purpose processor, which may include a central processing unit (CPU), a network processor (NP), and the like; and it may also be a digital signal processor (DSP), an application specific integrated circuit (ASIC), a field programmable gate array (FPGA) or other programmable logic devices, discrete gates or transistor logic devices, or discrete hardware components. The methods, steps, and logical block diagrams as disclosed in embodiments of the present application can be implemented or performed. The general purpose processor may be a microprocessor, or the processor may also be any conventional processor, etc. The steps of the method disclosed in conjunction with the embodiments of the present application can be directly embodied as being performed by the hardware decoding processor or being performed with a combination of hardware and software modules in the decoding processor. The software module may be located in a random access memory, a flash memory, a read-only memory, a programmable read-only memory or an electrically rewritable programmable memory, a register, and other storage media well established in the art. The storage medium is located in the memory 601, and the processor 600 reads the information in the memory 601 and completes the steps of the above method in combination with its hardware.

The electronic device provided in embodiments of the present application is motivated by the same inventive concept as the method provided in embodiments of the present application, and has the same beneficial effect as the method it employs, runs or implements.

Another embodiment of the present application provides a computer-readable storage medium having a computer program stored thereon, wherein the program is executed by a processor to implement the control method of any of the above embodiments.

Referring to FIG. 7, the computer-readable storage medium illustrated therein is an optical disk 20 having a computer program (i.e., a program product) stored thereon, wherein the computer program, when run by a processor, executes the method provided by any of the foregoing embodiments.

It is noted that examples of the computer-readable storage medium may also include, but not limited to, a phase-change random access memory (PRAM), a static random access memory (SRAM), a dynamic random access memory (DRAM) and other types of random access memory (RAM), a read-only memory (ROM), an electrically erasable programmable read-only memory (EEPROM), a flash memory, or other optical, magnetic storage media, which will not be repeated herein.

Another embodiment of the present application provides a computer program product including a computer program, wherein the program is executed by a processor to implement the control method of any of the above embodiments.

Both the computer-readable storage medium and the computer program product provided by the above embodiments of the present application are motivated by the same inventive concept as the method provided by the embodiments of the present application, and have the same beneficial effect as the method employed, run or implemented by the application program stored therein.

It needs to be noted that:
the term "module" is not intended to be limited to a particular physical form. Depending on the specific application, modules may be implemented as hardware, firmware, software, and/or combinations thereof. In addition, different modules may share common components or even be implemented by the same components. Clear boundaries between different modules may or may not exist.

The algorithms and displays provided herein are not inherently associated with any particular computer, virtual apparatus, or other device. Various generic devices may also be used with the examples based herein. The structure required to construct such devices is obvious in light of the above description. Furthermore, the present application is not directed to any particular programming language. It should be understood that a variety of programming languages may be utilized to implement the contents of the present application as described herein, and that the description above of particular languages is intended to disclose the best embodiments of the present application.

It should be understood that although the individual steps in the flowcharts of the accompanying drawings are shown sequentially as indicated by the arrows, these steps are not necessarily performed sequentially in the order indicated by the arrows. Unless explicitly stated herein, these steps are performed in no strict order, and they can be performed in any other order. Moreover, at least some of the steps in the flowcharts of the accompanying drawings may include a plurality of sub-steps or a plurality of phases, which are not necessarily executed to completion at the same moment, but may be executed at different moments, and the order of their execution is not necessarily sequential, but may be executed in rotation or alternately with other steps or at least some of the sub-steps or phases of other steps.

The above embodiments express only the embodiments of the present application, which are described in a specific and detailed manner, but should not to be construed as limiting the scope of the patent of the present application. It should be noted that for a person of ordinary skill in the art, there are several variations and improvements that can be made without departing from the concept of the present application, all of which fall within the scope of protection of the present application. Therefore, the scope of protection of the present application shall be subject to the appended claims.

## Claims

1. An electrolyte injection control method, comprising:
reading electrolyte information from a data chip on a current electrolyte container by a reading device provided on a liquid delivery pipeline;
acquiring production line identification information corresponding to a current production line corresponding to the liquid delivery pipeline; and
controlling electrolyte injection to take place in the case of determining that an electrolyte type corresponding to the electrolyte container is consistent with an electrolyte type for the current production line based on the electrolyte information and the production line identification information.

2. The method according to claim 1, wherein said reading electrolyte information from a data chip on a current electrolyte container by a reading device provided on a liquid delivery pipeline comprises:
establishing a short distance communication connection with the data chip on the electrolyte container by the reading device on the liquid delivery pipeline in the case where the distance between the liquid delivery pipeline and the current electrolyte container is less than a preset distance; and
reading electrolyte information stored in the data chip by the reading device based on the short distance communication connection.

3. The method according to claim 2, wherein said establishing a short distance communication connection with the data chip on the electrolyte container by the reading device on the liquid delivery pipeline comprises:
establishing a radio frequency communication connection with a radio frequency identification (RFID) tag on the electrolyte container by an RFID reader on the liquid delivery pipeline.

4. The method according to claim 2, wherein said establishing a short distance communication connection with the data chip on the electrolyte container by the reading device on the liquid delivery pipeline comprises:
establishing a near field communication (NFC) connection with an NFC data chip on the electrolyte container by an NFC reading device on the liquid delivery pipeline.

5. The method according to any one of claims 1-4, wherein said acquiring production line identification information corresponding to a current production line corresponding to the liquid delivery pipeline comprises:
scanning a graphic code on the liquid delivery pipeline by a code scanning device, and parsing the graphic code scanned to obtain the production line identification information corresponding to the current production line.

6. The method according to any one of claims 1-5, wherein said controlling electrolyte injection to take place in the case of determining that an electrolyte type corresponding to the electrolyte container is consistent with an electrolyte type for the current production line based on the electrolyte information and the production line identification information comprises:
parsing out the electrolyte type corresponding to the current electrolyte container from the electrolyte information;
acquiring a preset electrolyte type corresponding to the current production line according to the production line identification information; and
controlling, in the case where the electrolyte type parsed out is consistent with the preset electrolyte type, a valve on a connection pipeline between the electrolyte container and a electrolyte injecting device to open.

7. The method according to any one of claims 2-6, further comprising:
controlling the electrolyte injection to stop in the case of detecting a disconnection of the short distance communication connection between the reading device and the data chip.

8. The method according to any one of claims 1-7, further comprising:
caching the electrolyte information;
re-reading electrolyte information by the reading device at preset intervals; and
controlling the electrolyte injection to stop in the case where the re-read electrolyte information is different from the cached electrolyte information.

9. The method according to any one of claims 1-8, further comprising:
acquiring container identification information corresponding to the electrolyte container;
in the case of said determining that an electrolyte type corresponding to the electrolyte container is consistent with an electrolyte type for the current production line, further determining, based on the production line identification information and the container identification information, whether electrolyte in the electrolyte container meets a preset injecting condition; and
in the case where the electrolyte in the electrolyte container meets the preset injecting condition, performing the operation of controlling electrolyte injection to take place.

10. The method according to claim 9, wherein said determining, based on the production line identification information and the container identification information, whether electrolyte in the electrolyte container meets a preset injecting condition comprises:
acquiring electrolyte detail information corresponding to the current production line based on the production line identification information, the electrolyte detail information comprising at least one of an electrolyte type, a specification, and an expiration date;
acquiring electrolyte detail information corresponding to the electrolyte container based on the container identification information; and
determining, based on the electrolyte detail information for the current production line and the electrolyte detail information corresponding to the electrolyte container, whether the electrolyte in the electrolyte container meets the preset injecting condition.

11. The method according to claim 9, wherein said determining, based on the production line identification information and the container identification information, whether electrolyte in the electrolyte container meets a preset injecting condition comprises:
sending the production line identification information and the container identification information to a host computer; and
receiving a judgment result returned by the host computer, the judgment result being used to indicate whether the electrolyte in the electrolyte container meets the preset injecting condition.

12. The method according to any one of claims 9-11, wherein said acquiring container identification information corresponding to the electrolyte container comprises:
parsing out the container identification information corresponding to the electrolyte container from the electrolyte information read by the reading device; or
obtaining the container identification information corresponding to the electrolyte container by scanning a graphic code on the electrolyte container by the code scanning device.

13. An electrolyte injection control apparatus, comprising:
an acquisition module for reading electrolyte information from a data chip on a current electrolyte container by a reading device provided on a liquid delivery pipeline; and acquiring production line identification information corresponding to a current production line corresponding to the liquid delivery pipeline; and
a injecting control module for controlling electrolyte injection to take place in the case of determining that an electrolyte type corresponding to the electrolyte container is consistent with an electrolyte type for the current production line based on the electrolyte information and the production line identification information.

14. An electronic device, comprising: a memory, a processor, and a computer program stored on the memory and runnable on the processor, the processor executing the program to implement the method of any one of claims 1-12.

15. A computer-readable storage medium having a computer program stored thereon, wherein the program is executed by a processor to implement the method of any one of claims 1-12.

16. A computer program product comprising a computer program, wherein the computer program is executed by a processor to implement the method of any one of claims 1-12.
